# EUROPEAN PATENT SPECIFICATION

(11) **EP 1 611 658 B1**
(45) Date of publication and mention of the grant of the patent: **15.03.2017**
(21) Application number: 04722777.2
(22) Date of filing: 24.03.2004
(51) Int. Cl.: H02J 7/00, H01R 31/06

(54) **BATTERY CHARGING ASSEMBLY**
BATTERIELADEANORDNUNG
ENSEMBLE DE RECHARGE DE BATTERIE

(30) Priority: 24.03.2003 US 457030 P; 08.04.2003 GB 0308141
(43) Date of publication of application: 04.01.2006
(73) Proprietor: BlackBerry Limited, Waterloo, ON N2K 0A7 (CA)
(72) Inventor: SIMOES, Felipe, Oliveira, Kitchener, Ontario N2N 3B2 (CA); TODD, Colin, Neil, Waterloo, Ontario N2L 2C5 (CA)
(74) Representative: MERH-IP Matias Erny Reichl Hoffmann Patentanwälte PartG mbB
(86) International application number: PCT/CA2004/000448
(87) International publication number: WO 2004/086587

(56) References cited:
- EP-A- 1 198 049
- DE-U- 20 116 332
- US-A- 5 510 691
- US-A- 5 648 712
- US-A- 6 160 378
- US-A1- 2002 195 993
- US-A1- 2003 117 104
- US-B1- 6 362 610
- PATENT ABSTRACTS OF JAPAN vol. 2000, no. 08, 6 October 2000 (2000-10-06) & JP 2000 139032 A (KYOCERA CORP), 16 May 2000 (2000-05-16)
- ANONYMOUS: "Wall plug charger with USB connector" RESEARCH DISCLOSURE, KENNETH MASON PUBLICATIONS, HAMPSHIRE, GB, vol. 453, no. 5, January 2002 (2002-01), XP007129542 ISSN: 0374-4353

## Description

### Cross-reference to Related Application

This application claims priority to U.S. Provisional Application No. 60/4457,030, filed March 24, 2003. This application also claims priority to U.K. Application No. 0308141.1, filed April 8, 2003.

### Technical Field

This technology relates to a battery charging assembly. In particular, the technology concerns an adapter for a battery charger that is utilized in charging an electronic device.

### Background Art

Battery chargers for mobile communication devices often have a fixed wall plug that is integral with a charging unit, or a cable leading from a charging unit and terminating in a fixed wall plug. The cable may be permanently attached to the charging unit or may be a separate cable that is plugged into the charging unit.

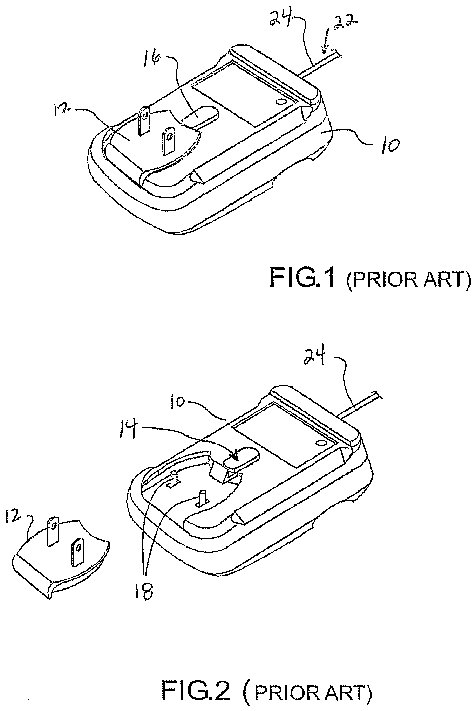

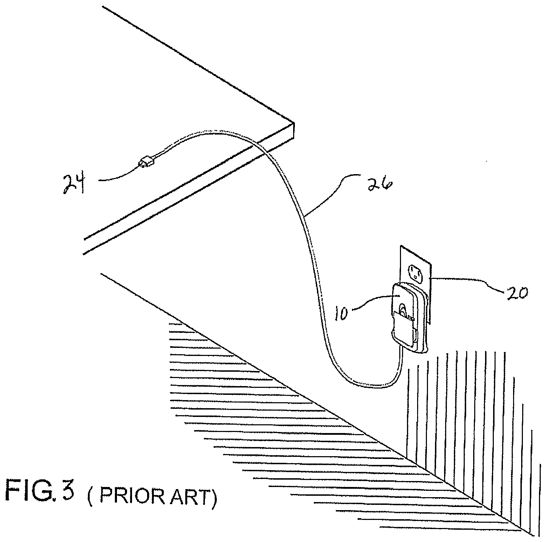

One prior art charging unit 10, shown in Figs. 1-3, is designed for use with different styles of electrical outlets so that a single charging unit 10 may be used in a number of different countries. Examples of different styles of electrical outlets include North American and European, among other known styles. In this unit, wall plug elements 12 are detachably and interchangeably installed on the charging unit 10 by a latch mechanism 14. The plug element 12 may be released from the charging unit 10 by pressing a release button 16. Electrical contacts on the back of the plug element 12 (not shown) engage corresponding electrical contacts 18 in the body of the charger 10.

The charger 10 is designed to plug directly into an electrical outlet 20. Different plug elements 12 may be utilized with the charging unit 10 by removing and replacing the plug element 12 with another. For example, a standard two-blade North American plug can be removed and replaced with a European plug having two cylindrical prongs. The circuitry within the charging unit 10 senses the voltage and frequency differences from country to country, and adjusts automatically. Such a charger 10 allows the manufacturer to sell the unit in a variety of countries by packaging the unit 10 with a different plug element 12 for each country. Alternatively, a kit that includes different plug elements 12 may be sold with the unit 10 so that the user may use the unit 10 in different countries. An output assembly 22, such as a USB connector 24 and cord 26 may be coupled to the charging unit 10 for charging an electronic device or battery at a location remote from the charging unit 10.

US 5,648,712 discloses an integrated power supply and battery charger. The device comprises a casing including a recess in the bottom surface. On one side of the casing and below the recess openings are provided, which house conducing pins. In a first operating mode, one of a plurality of plug carriers designed for different countries is attached to the casing, with the prongs of the attached plug carrier being electrically connected to the conducting pins in the openings. In a second operating mode, the plug carrier is removed from the casing and the power is received via a power cord comprising a plug and a universal power connector. The plug is connected to a wall outlet, whereas the universal power connector is connected to the conducting pins in the openings on the side of the casing. Different power cords for use with different configurations of wall outlets are provided.

### Disclosure of the Invention

In accordance with the teachings described herein, a battery charging assembly for charging a battery of a mobile device comprises a charging unit, an output assembly, and a first input assembly. The charging unit has a power converter for converting an input voltage to a desired output voltage and has a receptacle in form of a recess in the bottom surface of the charging unit. The receptacle forms a socket and has an opening on a side surface of the charging unit and at least one electrical contact for receiving the input voltage. The output assembly is coupled to the charging unit for charging a battery of a mobile device. The first input assembly is detachably associated with the charging unit and comprises an adapter for removable attachment to the charging unit, a power cord, and a plug configured to mate with a style of electrical outlet such that the charging unit is positionable at a remote location from the electrical outlet. The adapter is configured to mate with the receptacle of the charging unit, to slide longitudinally into the receptacle via the opening and to fill the recess in the bottom surface so that a substantially smooth bottom surface is provided when the adapter is positioned in the receptacle. Further, the adapter has at least one electrical contact for mating with the at least one electrical contact of the charging unit.

A second input assembly may also be provided that is interchangeable with the first input assembly. The second input assembly comprises a second input assembly adapter for removable attachment to the charging unit. The second input assembly adapter includes a plug configured to mate with an electrical outlet such that the charging unit is positionable adjacent an electrical outlet when the second input assembly adapter is installed. The output assembly may comprise a USB connector, with a cord connected to the USB connector.

A latch mechanism is provided to removably latch the adapter in the socket. The power cord, adapter and plug may be integral. Alternatively, the power cord, adapter, and plug may comprise separate parts that are configured to mate together.

In another embodiment, the battery charging assembly may comprises a set of input assemblies including the first input assembly. Each input assembly of the set of input assemblies is configured for individual detachable association with the socket of the charging unit. Each input assembly comprises an adapter for removable attachment within the socket, a power cord, and a plug configured to mate with a style of electrical wall socket. Each plug is configured to mate with a different style of electrical wall socket. The adapter has at least one electrical contact for mating with the at least one electrical contact of the socket.

In yet another embodiment, the body member includes a latching mechanism for latching the body member into the receptacle. In addition, the body member is configured to attach to a power cord and plug. In one embodiment, the latching mechanism comprises a recess defined in the body member and configured to receive an arm. In another embodiment, the latching mechanism comprises a pair of spring clips configured to engage a post defined in the receptacle. In yet another embodiment, the latching mechanism comprises a pair of guide bars configured to engage a post positioned in the receptacle and a pair of detents positioned on opposite sides of the body member. The detents are configured to engage spring biased ball bearings that are positioned on the receptacle. The latching mechanism may also include a release mechanism, such as a push button or plunger.

In one embodiment, the output assembly comprises a USB connector and a power cable. In another embodiment, the output assembly comprises a mini USB connector coupled to a USB A connector via a mini USB to USB A cable.

### Brief Description of the Drawing Figures

Fig. 1 is a bottom perspective view of a prior art battery charging unit having a interchangeable plug element;
Fig. 2 is a bottom perspective view of the prior art battery charging unit of Fig. 1 with the adapter removed from the socket;
Fig. 3 is a perspective view of the prior art battery charging unit of Fig. 1 installed in an electrical wall socket;
Fig. 4 is a perspective top view of an example battery charging unit;
Fig. 5 is a perspective bottom view of the example battery charging unit of Fig. 4;
Fig. 6 is a perspective top view of another embodiment of the example battery charging unit;
Fig. 7 is an exploded perspective bottom view of the battery charging unit shown in Fig. 6;
Fig. 8 is a perspective view of an example battery charging unit installed in an electrical wall socket;
Fig. 9 is an exploded perspective bottom view of another embodiment of the example battery charging unit;
Fig. 10 is a perspective bottom view of the battery charging unit of Fig. 9 with the adapter installed in the socket;
Fig. 11 is an exploded perspective top view of the battery charging unit of Fig. 9;
Fig. 12 is another exploded perspective top view of the battery charging unit of Fig. 9;
Fig. 13 is a side view of the battery charging unit of Fig. 9;
Fig. 14 is a bottom plan view of the battery charging unit of Fig. 9, showing internal surfaces in phantom;
Fig. 15 is a partial bottom plan view of the battery charging unit of Fig. 9, showing the adapter partially cut away in an installed position;
Fig. 16 is a partial bottom plan view of the battery charging unit similar to Fig. 15, but with the adapter in a partially uninstalled position;
Fig. 17 is an exploded bottom perspective view of another embodiment of the example battery charging unit;
Fig. 18 is a bottom perspective view of the battery charging unit of Fig. 17 with the adapter installed in the battery charging unit;
Fig. 19 is a partial bottom plan view of the battery charging unit of Fig. 17, with the adapter partially cut away in an installed position;
Fig. 20 is a partial bottom plan view similar to that of Fig. 19, but with the adapter in a partially installed position;
Fig. 21 is a partial bottom plan view similar to that of Fig. 19, but with the adapter in a partially installed position;
Fig. 22 is an exploded bottom perspective view of yet another embodiment of the example battery charging unit;
Fig. 23 is an exploded top perspective view of the battery charging unit of Fig. 22;
Fig. 24 is a bottom plan view of the battery charging unit of Fig. 22 showing internal parts in phantom;
Fig. 25 is a partial bottom plan view of the battery charging unit of Fig. 22 showing the adapter partially cut away in an installed position;
Fig. 26 is a partial bottom plan view similar to Fig. 25, but with the adapter in a partially installed position; and
Fig. 27 is a block diagram illustrating an example mobile communication device.

### Best Mode for Carrying Out the Invention

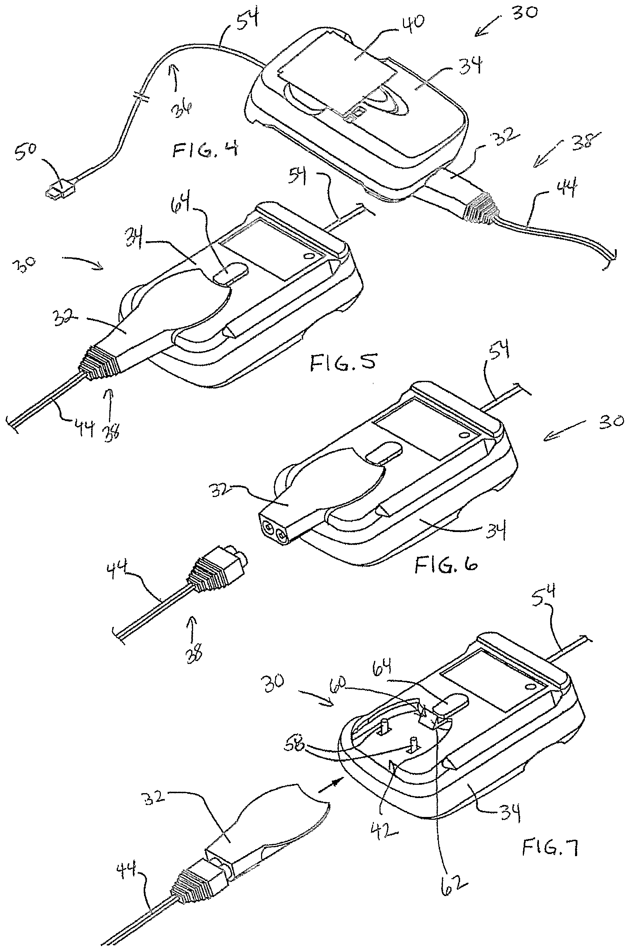

With reference now to the drawings, Figs. 4-26 include various views of an example battery charging assembly 30 that includes an adapter 32 that provides for usage of the assembly in a number of different countries. In addition, the example assembly 30 allows for a charging unit 34 to be positioned at a remote location from an electrical outlet 20, and provides an output assembly 36 that allows for charging of the battery of an electronic device at a remote location from the charging unit 34. The terms "electronic device" and "mobile device" are used herein to generically refer to a mobile communication device, such as a mobile station, cellular telephone, wireless personal digital assistant (PDAs), two-way paging device, or other electronic device.

The example battery charging assembly 30 may be utilized interchangeably with an input assembly 38 that allows for remote positioning of the battery charging assembly 30 relative to an electrical outlet 20, or with a plug adapter 12 that can be coupled to the charging unit 34 to attach the charging unit 34 directly to a wall outlet 20. A known charging unit having a receptacle for receiving an adapter is manufactured by Phihong USA, among other known manufacturers, the claims not being limited to a particular type of charging unit.

The charging unit 34 is a device that is used to charge a battery of an electronic device. In a preferred embodiment, the charging unit 34 includes a power converter for converting an input voltage from an electrical outlet 20 to an output voltage that is useable by the electronic device. The power converter may include a fuse, an input source, an electrical filter, a transformer, a top switch feedback loop, an output-rectified filter, a DC-DC converter, an AC-AC converter, an AC-DC converter, an output filter, and/or a voltage and current feedback controller, among other known power converters. The power converter is configured to allow for usage of the charging unit 34 in different countries, and includes circuitry to convert the input voltage to an output voltage that is acceptable for charging a battery of an electronic device.

In a preferred embodiment, the charging unit 34 includes electrical contacts for charging an individual battery or a mobile device having a battery directly in a docking station 40 of the charging unit 34. In addition, the charging unit 34 includes an output assembly 36 that allows for remote charging of an electronic device. Therefore, the charging unit 34 allows for the charging of a battery and a mobile device at the same time, with the battery being positioned in the docking station 40 of the charging unit 34 and the mobile device being coupled to the output assembly 36.

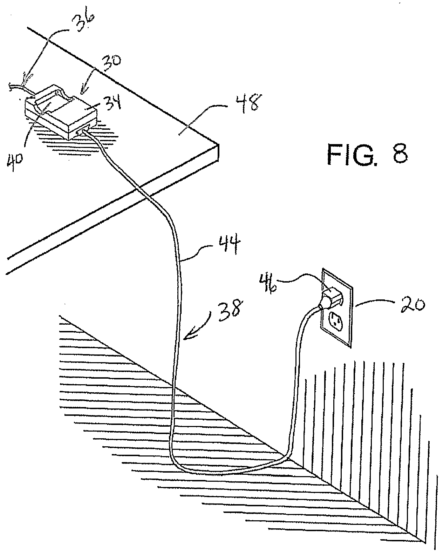

Figs. 4-7 depict a first embodiment of the example battery charging assembly 30. The assembly 30 includes a charging unit 34, an input assembly 38, and an output assembly 36. The charging unit 34 includes a receptacle 42 for receiving the input assembly 38. The input assembly 38 includes an adapter 32 having a body member that is configured to mate with the receptacle 42, a power cord 44, and a plug 46 (shown in Fig. 8). The plug 46 is configured to mate with a style of electrical outlet 20, such as a North American or European style, among other known styles. In a preferred embodiment, the receptacle is a socket 42 that is recessed into the surface of the charging unit 34 and the adapter 32 is a body member in the shape of a flat plug. When the adapter 32 is positioned in the socket 32, a smooth bottom surface of the charging unit 34 is provided. This allows for positioning the charging unit 34 on a table top 48, for example.

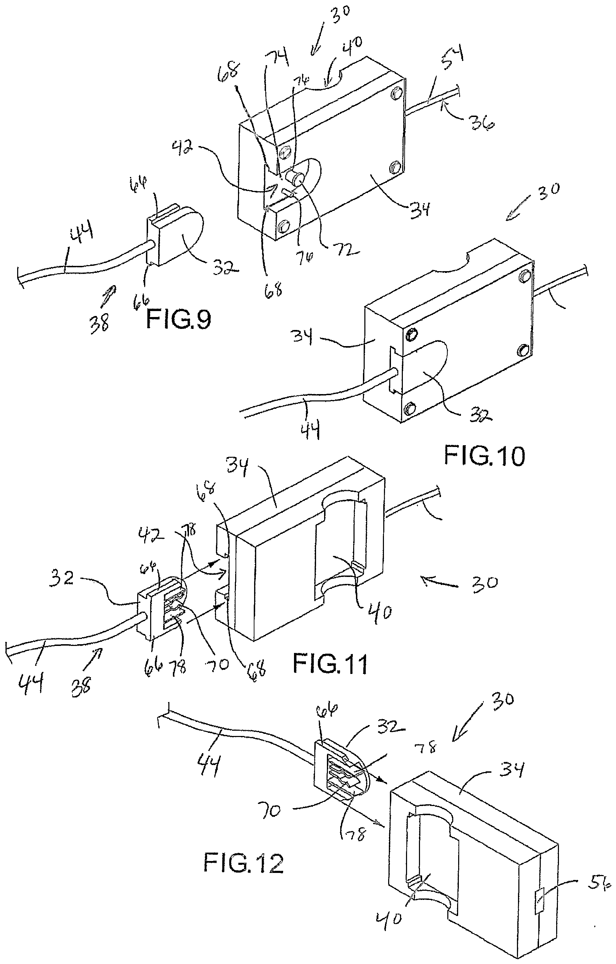

The output assembly 36, depicted in Figs. 4-7, preferably includes a USB connector 50 at one end and a second connector 52, such as a USB connector, at the other end. The second connector 52 couples a cord 54 to the charging unit 34. Other types of connectors may alternatively be utilized in some embodiments of the example battery charging assembly 30. In a preferred embodiment, the output assembly 36 includes a mini USB connector 50, a USB A connector 52, and power cable 54 coupled between the connectors. The charging unit 34 includes a port 56 for accepting the USB A connector (shown, for example, in Fig. 12), and also includes circuitry for providing power through the mini USB connector 50. The charging unit 34 also includes a recess or docking station 40 for accepting a battery or an electronic device directly in the unit 34 for direct charging of the battery. The recess 40 in the charging unit 34 preferably includes electrical contacts for mating with electrical contacts on the battery or electronic device and for transferring power from the charging unit 34 to the battery or device.

Figs. 4 and 5 depict a first embodiment of the input assembly 38, where the adapter 32, power cord 44, and plug 46 are integral with one another to form a single part. Figs. 6 and 7 depict an input assembly 38 that includes an adapter 32 that is separate from the power cord 44 and plug 46. In this embodiment, the adapter 32 includes a C-8 style connector for coupling with a C-8 style power cord connector. Other types of connectors may alternatively be utilized. As shown in Fig. 7, the charging unit includes electrical contacts 58 for mating with electrical contacts on the adapter 32. In addition, the adapter 32 is sized and shaped to seat in the socket 42.

A latching mechanism 60 is provided on the charging unit 34 for latching the adapter 32 in position. The latching mechanism 60 includes an arm 62 that is configured to engage a recess (not shown) defined in the adapter 32. The adapter 32 is released from the socket 42 by pressing a release button 64.

Fig. 8 depicts the example charging unit 34 positioned on a table top 48 at a location that is remote from the electrical wall socket 20. As shown, the top of the charging unit 34 includes a docking station 40 for accepting a battery or mobile device for charging. In addition, an input assembly 38 includes a plug 46 configured to mate with a style of electrical outlet 20, a power cord 44, and an adapter 32 positioned on the bottom of the charging unit 34. In addition, an output assembly 36, including a cord 54, extends from the charging unit 34 for charging an electronic device at a location that is remote from the charging unit 34. As discussed above, in a preferred embodiment, a USB connector 50 is attached to the output cord 54.

Figs. 9-16 depict another embodiment of the example battery charging assembly 30. The charging assembly 30 includes a charging unit 34, an input assembly 38, and an output assembly 36. The charging unit 34 includes a receptacle 42 in the form of a socket 42 for receiving the input assembly 38. The input assembly 38, as discussed above, includes a power cord 44, a plug 46, and an adapter 32. The adapter 32 is sized to seat in the socket 42.

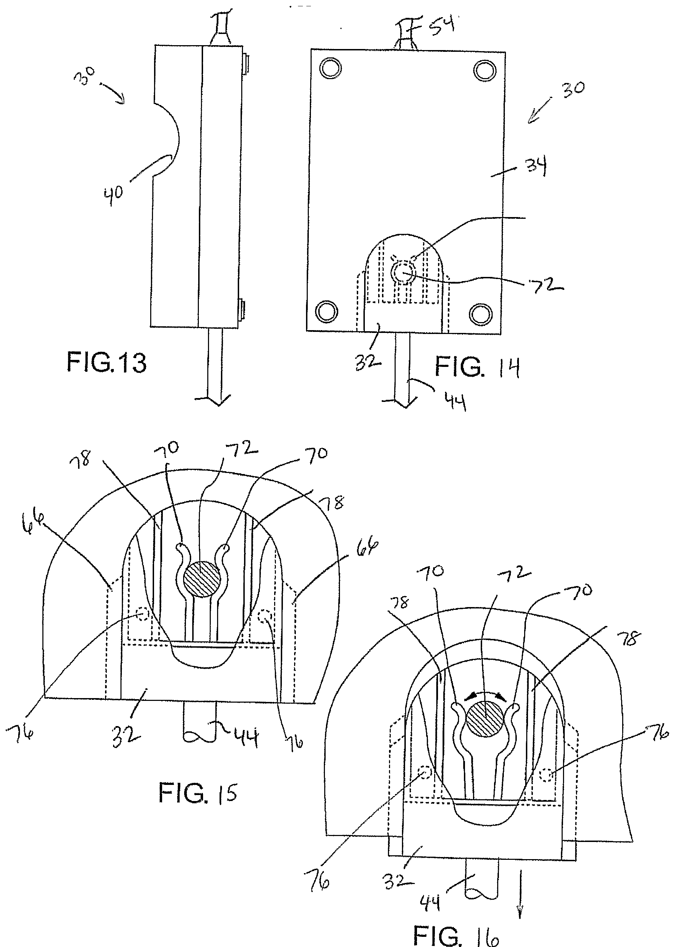

As shown in Figs. 9-12, the adapter 32 includes a latching mechanism for latching the adapter 32 to the socket 42. The adapter 32 is configured to slide longitudinally into the socket 42 and includes legs 66 that are configured to engage channels 68 defined on the side of the socket 42. The interaction of the legs 66 and channels 68 helps to maintain the adapter 32 in the socket 42 and to prevent transverse movement of the adapter 32 relative to the socket 42. In addition, the adapter 32 includes a pair of spring arms 70 that are configured to engage a contact post 72 that extends transversely outwardly from an inner surface 74 of the socket 42. The spring arms 70 and contact post 72 also help to maintain the adapter 32 in the socket 42 and deter longitudinal movement of the adapter 32 relative to the socket 42 when in the installed position, shown in Fig. 15. In addition, the socket 42 includes two guide pins 76 that are positioned adjacent to, but spaced from the contact post 72. The guide pins 76 interact with longitudinal walls 78 defined on the adapter 32 to guide the spring arms 70 around the contact post 72. In addition, the guide pins 76 may serve as electrical contacts for mating with electrical contacts on the adapter 32 to transfer power from the input assembly 38 to the charging unit 34. Other positions for the electrical contacts may also be provided. Once installed, the adapter 32 is maintained in the socket 42 until the user applies a longitudinal force sufficient to move the spring arms 70 outwardly around the contact post 72, as shown in Fig. 16.

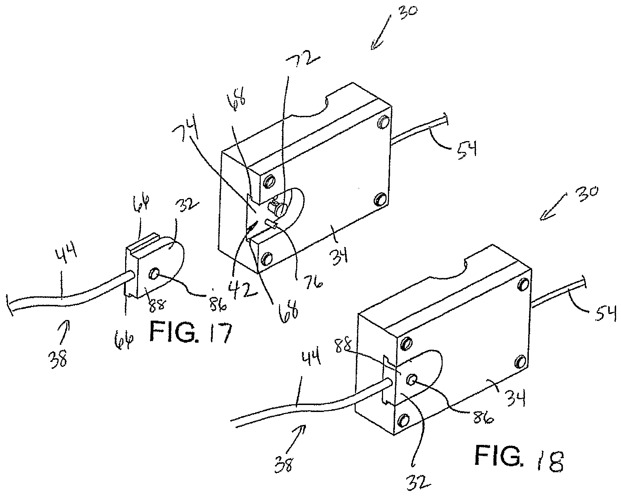

Figs. 17-21 depict an alternative embodiment of the battery charging assembly 30 that includes a charging unit 34, an input assembly 38, and an output assembly 36. The charging unit 34 includes a receptacle in the form of a socket 42 for receiving the input assembly 38. The input assembly 38 includes an adapter 32, a power cord 44, and a plug 46 for mating with a style of electrical outlet 20. The adapter 32 includes a latching mechanism for latching the adapter 32 to the socket 42. The adapter 32 includes outwardly extending legs 66 and the socket 42 includes opposing channels 68 configured to accept the legs 66. The legs 66 and channels 68 combine to maintain the adapter 32 in the socket 42 and to deter transverse movement of the adapter 32 from the socket 42.

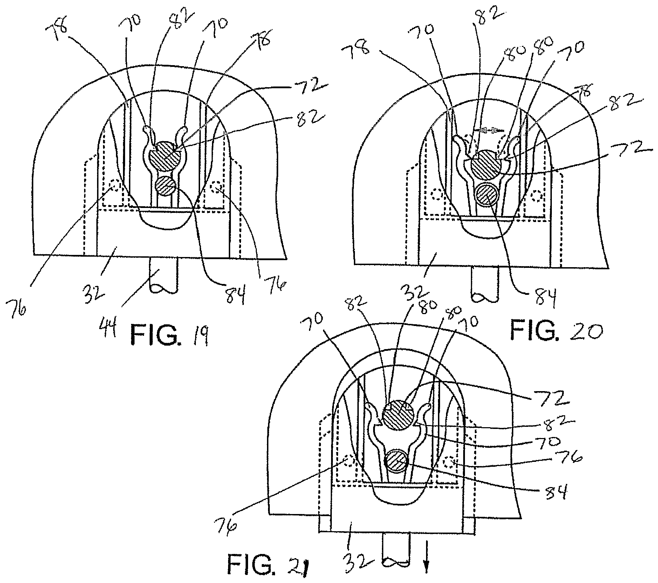

The socket 42 also includes an outwardly extending contact post 72 and two outwardly extending guide pins 76 that are positioned on opposing sides of the contact post 72. The contact post 72 includes a pair of recesses 80, one on each side of the post 72. The adapter 32 includes a pair of spring arms 70 that are configured to engage the contact post 72. The spring arms 70 each include inwardly extending protrusions 82 that are configured to engage the recesses 80 on the contact post 72. When the adapter 32 is in an installed position, as shown in Fig. 19, the protrusions 82 engage the recesses 80 on the contact post 72 to lock the adapter 32 in position within the socket 42 and to deter longitudinal movement of the adapter 32 relative to the socket 42. The guide pins 76 interact with longitudinal walls 78 defined on the adapter 32 to guide the spring arms 70 around the contact post 72. In addition, the guide pins 76 may serve as electrical contacts which are configured to engage opposed electrical contacts on the adapter 32. The electrical contacts are for transferring power from the input assembly 38 to the charging unit 34. Other positions for the electrical contacts may also be provided.

In addition, the adapter 32 includes a plunger 84 that is positioned between the two spring arms 70. The plunger 84 extends transversely through the adapter 32 and includes a button 86 that is positioned on the outer surface 88 of the adapter 32. The plunger 84 is tapered from a larger cross-section at the outer surface 88 of the adapter 32 to a smaller cross-section at the inner side 90 of the adapter 32 (the side that faces the socket 42). The user depresses the plunger 84 to release the spring arms 70 from the contact post 72 and to allow the adapter 32 to be moved longitudinally relative to the charging unit 34. When depressed, the larger cross-section of the plunger 84 moves against the spring arms 70 to spread them apart, which, in turn, releases the protrusions 82 from the recesses 80 defined in the contact post 72. When the plunger 84 is depressed a sufficient amount, the spring arm protrusions 82 are cleared from the recesses 80 of the contact post 72 to allow the user to slide the adapter 32 out of the socket 42, as shown in Figs. 20-21.

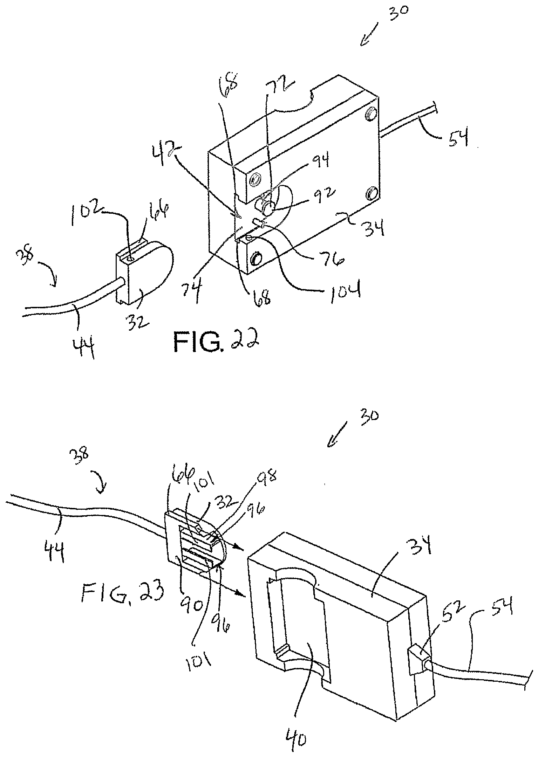

Figs. 22-26 depict yet another embodiment of the battery charging assembly 30 that includes a charging unit 34, an input assembly 38, and an output assembly 36. The charging unit 34 includes a receptacle in the form of a socket 42 for receiving the input assembly 38. The input assembly 38 includes an adapter 32, a power cord 44, and a plug 46 for mating with a style of electrical outlet 20. The adapter 32 includes a latching mechanism for latching the adapter to the socket 42. The adapter 32 includes outwardly extending legs 66 and the socket 42 includes opposing channels 68 configured to accept the legs 66. The legs 66 and channels 68 combine to maintain the adapter 32 in the socket 42 and to deter transverse movement of the adapter 32 from the socket 42.

The socket 42 also includes an outwardly extending contact post 72 and two guide pins 76 that are positioned on opposing sides of the contact post 72. The contact post 72 includes a head portion 92 and a shaft portion 94. The shaft portion 94 extends outwardly from the inner surface 74 of the socket 42, and the head portion 92 is connected to the shaft portion 94. The head portion 92 has a larger diameter than the shaft portion 94 of the contact post 72. The adapter 32 includes a pair of guide bars 96 that are configured to engage the shaft of the contact post 72 directly beneath the head 92 of the contact post 72. The guide bars 96 extend longitudinally and have an L-shaped cross-section. A first part 98 of the L extends transversely outwardly from an inner surface 90 of the adapter 32, and a second part 101 of the L extends transversely inwardly from the first part 98 of the L. The second part 101 of the L-shaped member engages the shaft 94 of contact post 72. And the adapter 32 is deterred from transverse movement relative to the contact post 72 by the blocking action of the head 92 of the contact post 72 relative to the second leg 101 of the L-shaped guide bars 96. The guide pins 76 interact with the outer side of the first part 98 of the L-shaped guide bars 96, to assist in guiding the adapter 32 into the socket 42.

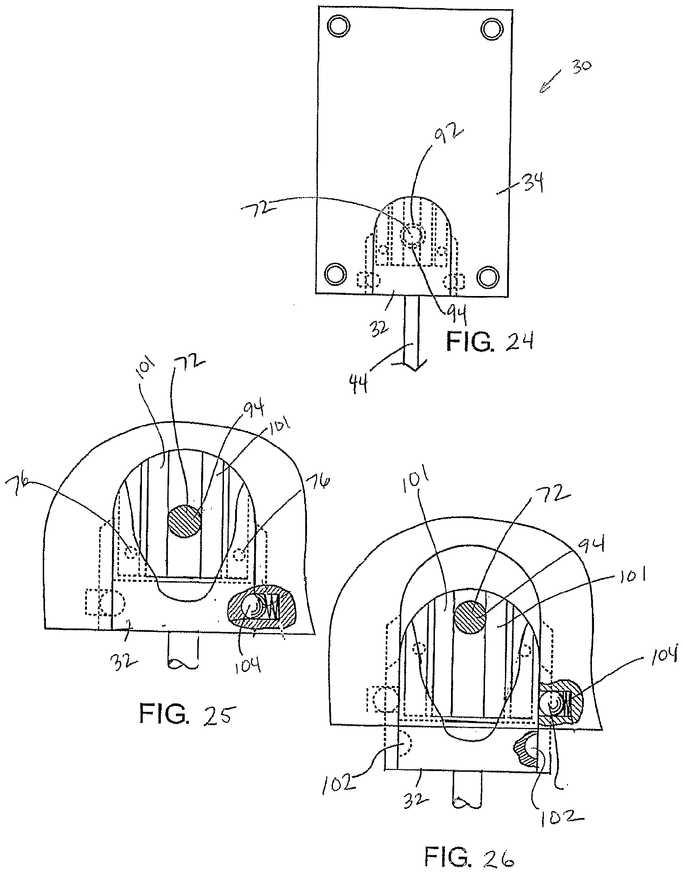

In addition, the adapter 32 includes an additional latching mechanism in the form of a pair of detents 102 that are configured to engage spring-biased ball bearings 104 positioned on the sides of the socket 42. The detents 102, in combination with the spring-biased ball bearings 104, assist in maintaining the adapter 32 in the socket 42 to deter longitudinal movement of the adapter 32 relative to the socket 42. The user may remove the adapter 32 from the socket 42 by exerting a force that is sufficient to move the detents 102 away from the ball bearings 104, as shown in Fig. 26.

The battery charging assembly 30 may be provided with a plurality of input assemblies 38 or adapters 32, such as in a kit that includes adapters 32 for a variety of countries. Alternatively, users may purchase individual input assemblies 38 or adapters 32 for different countries depending upon their travel plans.

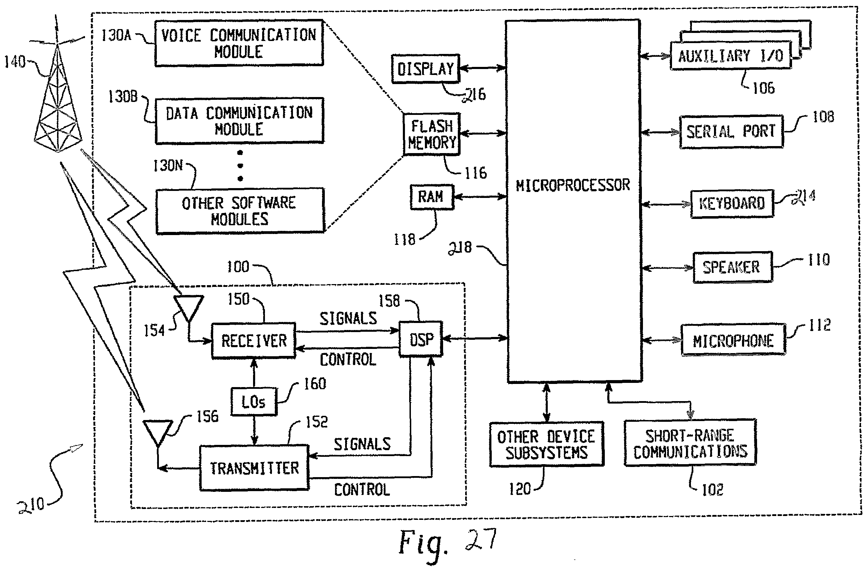

Fig. 27 is a schematic diagram of an exemplary mobile communication device that has an industry standard interface. The mobile communication device is preferably a two-way communication device having at least voice or data communication capabilities. Preferably, the mobile device is also capable of communicating over the Internet , for example, via a radio frequency ("RF") link. Examples of types of devices that could be classified as a mobile communication device including a data messaging device, a two-way pager, a cellular telephone with or without data messaging capabilities, a wireless Internet appliance, a data communication device (with or without telephony capabilities), a personal digital assistant ("PDA"), a wireless two-way e-mail communication device, and others. The example battery charging assembly 30 is utilized to charge a mobile communication device or a battery for a mobile communication device, among other electrical devices.

Handheld mobile communication devices 210 include similar features, such as a housing 226, a keyboard 214 and a display 216. The display 216 is preferably a full graphic LCD. Other types of output devices may alternatively be utilized. A processing device 218, which is shown schematically in Fig. 27, is contained within the housing 226 and is coupled between the keyboard 214 and the display 216. The processing device 218 controls the operation of the display 216, as well as the overall operation of the mobile communication device 210, in response to actuation of keys on the keyboard 214 by the user.

The housing 226 may be elongated vertically, or may take on other sizes and shapes. The keyboard may include a mode selection key, or other hardware or software for switching between text entry and telephony entry.

In addition to the processing device 218, other parts of the mobile communication device 210 are shown schematically in Fig. 27. These include a communications subsystem 100; a short-range communications subsystem; the keyboard 214 and the display 216, along with other input/output devices 106, 108, 110 and 112; as well as memory devices 116, 118 and various other device subsystems 120. The mobile communication device 210 is preferably a two-way RF communication device having voice and data communication capabilities. In addition, the mobile communication device 210 preferably has the capability to communicate with other computer systems via the Internet.

Operating system software executed by the processing device 218 is preferably stored in a persistent store, such as a flash memory 116, but may be stored in other types of memory devices, such as a read only memory (ROM) or similar storage element. In addition, system software, specific device applications, or parts thereof, may be temporarily loaded into a volatile store, such as a random access memory (RAM) 118. Communication signals received by the mobile communication device may also be stored to the RAM 118.

The processing device 218, in addition to its operating system functions, enables execution of software applications 130A-130N on the device 210. A predetermined set of applications that control basic device operations, such as data and voice communications 130A and 130B, may be installed on the device 210 during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network 140. Preferably, the PIM data items are seamlessly integrated, synchronized and updated via the wireless network 140 with the device user's corresponding data items stored or associated with a host computer system. An example system and method for accomplishing these steps is disclosed in "System And Method For Pushing Information From A Host System To A Mobile Device Having A Shared Electronic Address," U.S. Patent No. 6,219,694, which is owned by the assignee of the present application, and which is incorporated herein by reference.

Communication functions, including data and voice communications, are performed through the communication subsystem 100, and possibly through the short-range communications subsystem. The communication subsystem 100 includes a receiver 150, a transmitter 152, and one or more antennas 154, 156. In addition, the communication subsystem 100 also includes a processing module, such as a digital signal processor (DSP) 158, and local oscillators (LOs) 160. The specific design and implementation of the communication subsystem 100 is dependent upon the communication network in which the mobile communication device 210 is intended to operate. For example, a mobile communication device 210 may include a communication subsystem 100 designed to operate with the Mobitex™, Data TAC™ or General Packet Radio Service (GPRS) mobile data communication networks and also designed to operate with any of a variety of voice communication networks, such as AMPS, TDMA, CDMA, PCS, GSM, etc. Other types of data and voice networks, both separate and integrated, may also be utilized with the mobile communication device 210.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile communication device 210 may send and receive communication signals over the communication network 140. Signals received from the communication network 140 by the antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 140 are processed (e.g. modulated and encoded) by the DSP 158 and are then provided to the transmitter 152 for digital to analog conversion, frequency up conversion, filtering, amplification and transmission to the communication network 140 (or networks) via the antenna 156.

In addition to processing communication signals, the DSP 158 provides for control of the receiver 150 and the transmitter 152. For example, gains applied to communication signals in the receiver 150 and transmitter 152 may be adaptively controlled through automatic gain control algorithms implemented in the DSP 158.

In a data communication mode, a received signal, such as a text message or web page download, is processed by the communication subsystem 100 and is input to the processing device 218. The received signal is then further processed by the processing device 218 for an output to the display 216, or alternatively to some other auxiliary I/O device 106. A device user may also compose data items, such as e-mail messages, using the keyboard 214 and/or some other auxiliary I/O device 106, such as a touchpad, a rocker switch, a thumb-wheel, or some other type of input device. The composed data items may then be transmitted over the communication network 140 via the communication subsystem 100.

In a voice communication mode, overall operation of the device is substantially similar to the data communication mode, except that received signals are output to a speaker 110, and signals for transmission are generated by a microphone 112. Alternative voice or audio I/O subsystems, such as a voice message recording subsystem, may also be implemented on the device 10. In addition, the display 216 may also be utilized in voice communication mode, for example to display the identity of a calling party, the duration of a voice call, or other voice call related information.

The short-range communications subsystem enables communication between the mobile communication device 210 and other proximate systems or devices, which need not necessarily be similar devices. For example, the short-range communications subsystem may include an infrared device and associated circuits and components, or a Bluetooth™ communication module to provide for communication with similarly-enabled systems and devices.

### Industrial Applicability

The present invention is directed a battery charger that is utilized in charging an electronic device.

## Claims

1. A battery charging assembly (30) for charging a battery of a mobile device comprising:
a charging unit having (34) a power converter for converting an input voltage to a desired output voltage and having a receptacle (42) in form of a recess in the bottom surface of the charging unit (34), the receptacle (42) forming a socket and having at least one electrical contact (58) for receiving the input voltage;
an output assembly (36) coupled to the charging unit (34) for charging a battery of a mobile device;
a first input assembly (38) detachably associated with the charging unit (34), said input assembly (38) comprising an adapter (32) for removable attachment to the charging unit (34), a power cord (44), and a plug (46) configured to mate with a style of electrical outlet (20) such that the charging unit is positionable at a remote location from the electrical outlet (20), said adapter (32) being configured to mate with the receptacle (42) of the charging unit (34), said adapter (32) further having at least one electrical contact for mating with the at least one electrical contact (58) of the charging unit (34); and
a latching mechanism (60) for removably latching the adapter (32) in the receptacle (42), **characterised in that** the latching mechanism comprises a post (72) defined in the receptacle (42) and two arms (70; 96) defined on the adapter (32) which are adapted to engage the post (72) when the adapter (32) is positioned in the receptacle (42).

2. The battery charging assembly (30) of claim 1, further comprising a second input assembly interchangeable with the first input assembly (38), the second input assembly comprising a second input assembly adapter (32) for removable attachment to the charging unit (34), said second input assembly adapter (32) including a plug (46) configured to mate with an electrical outlet (20) such that the charging unit (34) is positionable adjacent an electrical outlet (20) when the second input assembly adapter (32) is installed.

3. The battery charging assembly (30) of claim 1, wherein the output assembly (36) comprises a USB connector (50).

4. The battery charging assembly (30) of claim 3, further comprising a cord (54) coupled to the USB connector (50).

5. The battery charging assembly (30) of claim 1, wherein the output assembly (36) comprises electrical contacts associated with the charging unit (34) and configured to charge at least one of a battery and a mobile device.

6. The battery charging assembly (30) of claim 1, wherein the output assembly (36) comprises a docking station coupled to the charging unit (34).

7. The battery charging assembly (30) of claim 1, wherein the power cord (44), adapter (32) and plug (46) are integral.

8. The battery charging assembly (30) of claim 1, wherein the charging unit (34) further comprises a power converter module.

9. The battery charging assembly (30) of claim 8, wherein the power converter module comprises at least one of a fuse, an input source, an electrical filter, a transformer, a top switch feedback loop, an output-rectified filter, a DC-DC converter, an AC-AC converter, an AC-DC converter, an output filter, and a voltage and current feedback controller.

10. The battery charging assembly (30) of claim 1, wherein the power cord (44), adapter (32), and plug (46) comprise separate parts that are configured to mate together.

11. The battery charging assembly (30) of claim 1, comprising:
a set of input assemblies (38) including the first input assembly (38), each configured for individual detachable association with the receptacle (42) of the charging unit (34), each said input assembly (38) comprising an adapter (32) for removable attachment within the receptacle (42), a power cord (44), and a plug (46) configured to mate with a style of electrical wall socket (20), where each plug (46) is configured to mate with a different style of electrical wall socket (20), said adapter (32) having at least one electrical contact for mating with the at least one electrical contact (58) of the receptacle (42).

12. The battery charging assembly (30) of claim 1, wherein the arms of the latching mechanism comprise a pair of spring clips (70) configured to engage the post (72) defined in the receptacle (42).

13. The battery charging assembly (30) of claim 12, wherein each of the pair of spring clips (70) includes an inwardly extending protrusion (82) for mating with a corresponding recess (80) defined on the post (72) positioned in the receptacle (42).

14. The battery charging assembly (30) of claim 13, further comprising a plunger (84) positioned between the pair of spring clips (70), said plunger (84) being movable vertically relative to the spring clips (70) and having a contour that spreads the spring clips (70) apart when moved vertically.

15. The battery charging assembly (30) of claim 1, further comprising at least one guide pin (76) for guiding the adapter into the receptacle (42).

16. The battery charging assembly (30) of claim 1, wherein the arms of the latching mechanism (60) comprise a pair of guide bars (96) configured to engage the post (72) positioned in the receptacle (42) and wherein an additional latching mechanism is provided, which comprises a pair of detents (102) positioned on opposite sides of the adapter (32), said detents (102) configured to engage spring biased ball bearings (104) that are positioned on the receptacle (42).

17. The battery charging assembly (30) of claim 16, wherein the guide bars (96) have an L-shaped cross-section, with one leg of the L configured to engage the post (72) positioned in the receptacle (42).

18. The battery charging assembly (30) of claim 1, wherein the latching mechanism (60) further comprises a release mechanism.

19. The battery charging assembly (30) of claim 18, wherein the release mechanism is a push button.

20. The battery charging assembly (30) of claim 18, wherein the release mechanism is a plunger (84).

21. The battery charging assembly (30) of claim 1, wherein the output assembly (36) comprises a mini USB connector (50) coupled to a USB A connector via a cable (54).

## Patentansprüche

1. Batterieladeanordnung (30) zum Laden einer Batterie einer mobilen Vorrichtung, die Folgendes umfasst:
eine Ladeeinheit (34), die einen Leistungsumsetzer zum Umsetzen einer Eingangsspannung in eine gewünschte Ausgangsspannung aufweist und die eine Aufnahme (42) in Form einer Vertiefung in der Bodenfläche der Ladeeinheit (34) aufweist, wobei die Aufnahme (42) eine Fassung bildet und mindestens einen elektrischen Kontakt (58) zum Empfangen der Eingangsspannung aufweist;
eine Ausgangsanordnung (36), die an die Ladeeinheit (34) gekoppelt ist, um eine Batterie einer mobilen Vorrichtung zu laden;
eine erste Eingangsanordnung (38), die lösbar mit der Ladeeinheit (34) verbunden ist, wobei die Eingangsanordnung (38) einen Adapter (32), der lösbar an der Ladeeinheit (34) befestigt ist, ein Netzkabel (44) und einen Stecker (46) umfasst, der so konfiguriert ist, dass er zu einer Art einer elektrischen Steckdose (20) passt, so dass die Ladeeinheit an einem von der elektrischen Steckdose (20) entfernten Ort positioniert werden kann, wobei der Adapter (32) konfiguriert ist, zu der Aufnahme (42) der Ladeeinheit (34) zu passen, wobei der Adapter (32) ferner mindestens einen elektrischen Kontakt aufweist, um zu dem mindestens einen elektrischen Kontakt (58) der Ladeeinheit (34) zu passen; und
einen Einrastmechanismus (60) zum lösbaren Einrasten des Adapters (32) in der Aufnahme (42), **dadurch gekennzeichnet, dass** der Einrastmechanismus einen in der Aufnahme (42) definierten Stift (72) und zwei auf dem Adapter (32) definierte Arme (70; 96) umfasst, die dafür ausgelegt sind, in den Stift (72) einzurasten, wenn der Adapter (32) in der Aufnahme (42) positioniert ist.

2. Batterieladeanordnung (30) nach Anspruch 1, die ferner eine zweite Eingangsanordnung umfasst, die gegen die erste Eingangsanordnung (38) getauscht werden kann, wobei die zweite Eingangsanordnung einen zweiten Eingangsanordnungsadapter (32) zur lösbaren Befestigung an der Ladeeinheit (34) umfasst, wobei der zweite Eingangsanordnungsadapter (32) einen Stecker (46) enthält, der so konfiguriert ist, dass er zu einer elektrischen Steckdose (20) passt, so dass die Ladeeinheit neben einer elektrischen Steckdose (20) positioniert werden kann, wenn der zweite Eingangsanordnungsadapter (32) installiert ist.

3. Batterieladeanordnung (30) nach Anspruch 1, wobei die Ausgangsanordnung (36) einen USB-Verbinder (50) umfasst.

4. Batterieladeanordnung (30) nach Anspruch 3, die ferner ein Kabel (54) umfasst, das an den USB-Verbinder (50) gekoppelt ist.

5. Batterieladeanordnung (30) nach Anspruch 1, wobei die Ausgangsanordnung (36) elektrische Kontakte umfasst, die mit der Ladeeinheit (34) verbunden sind und die konfiguriert sind, eine Batterie und/oder eine mobile Vorrichtung zu laden.

6. Batterieladeanordnung (30) nach Anspruch 1, wobei die Ausgangsanordnung (36) eine Andockstation umfasst, die an die Ladeeinheit (34) gekoppelt ist.

7. Batterieladeanordnung (30) nach Anspruch 1, wobei das Netzkabel (44), der Adapter (32) und der Stecker (46) einteilig ausgebildet sind.

8. Batterieladeanordnung (30) nach Anspruch 1, wobei die Ladeeinheit (34) ferner ein Leistungsumsetzungsmodul umfasst.

9. Batterieladeanordnung (30) nach Anspruch 8, wobei das Leistungsumsetzungsmodul mindestens eines der folgenden Elemente umfasst: eine Sicherung, eine Eingangsquelle, ein elektrisches Filter, einen Transformator, eine Rückkopplungsschleife eines oberen Schalters, ein Filter mit gleichgerichtetem Ausgang, einen Gleichstromumsetzer, einen Wechselstromumsetzer, einen Wechselstrom-Gleichstrom-Umsetzer, ein Ausgangsfilter und eine Spannungs- und Stromrückkopplungssteuereinrichtung.

10. Batterieladeanordnung (30) nach Anspruch 1, wobei das Netzkabel (44), der Adapter (32) und der Stecker (46) verschiedene Teile umfassen, die so konfiguriert sind, dass sie zusammenpassen.

11. Batterieladeanordnung (30) nach Anspruch 1, die Folgendes umfasst:
einen Satz von Eingangsanordnungen (38), die die erste Eingangsanordnung (38) enthalten, wobei jede für eine individuell lösbare Verbindung mit der Aufnahme (42) der Ladeeinheit (34) konfiguriert ist, wobei jede der Eingangsanordnungen (38) einen Adapter (32) zur lösbaren Befestigung in der Aufnahme (42), ein Netzkabel (44) und einen Stecker (46) umfasst, der so konfiguriert ist, dass er zu einer Art einer elektrischen Wandsteckdose (20) passt, wobei jeder Stecker (46) konfiguriert ist, zu einer anderen Art von elektrischer Wandsteckdose (20) zu passen, wobei jeder Adapter (32) mindestens einen elektrischen Kontakt aufweist, um zu dem mindesten einen elektrischen Kontakt (58) der Aufnahme (42) zu passen.

12. Batterieladeanordnung (30) nach Anspruch 1, wobei die Arme des Einrastmechanismus ein Paar Federklemmen (70) umfasst, das konfiguriert ist, in den in der Aufnahme (42) definierten Stift (72) einzurasten.

13. Batterieladeanordnung (30) nach Anspruch 12, wobei jede Klemme des Federklemmenpaares (70) einen sich nach innen erstreckenden Vorsprung (82) enthält, um zu einer entsprechende Vertiefung (80), die auf dem in der Aufnahme (42) positionierten Stift (72) definiert ist, zu passen.

14. Batterieladeanordnung (30) nach Anspruch 13, die ferner einen Stößel (84) umfasst, der zwischen dem Federklemmenpaar (70) positioniert ist, wobei der Stößel (84) vertikal relativ zu den Federklemmen (70) bewegt werden kann und einen Umriss aufweist, der die Federklemmen (70) auseinanderspreizt, wenn er vertikal bewegt wird.

15. Batterieladeanordnung (30) nach Anspruch 1, die ferner einen Führungsbolzen (76) umfasst, um den Adapter in die Aufnahme (42) zu führen.

16. Batterieladeanordnung (30) nach Anspruch 1, wobei die Arme des Einrastmechanismus (60) ein Paar Führungsschienen (96) umfassen, das konfiguriert ist, in den in der Aufnahme (42) positionierten Stift (72) einzurasten, und wobei ein zusätzlicher Einrastmechanismus vorgesehen ist, der ein Paar auf gegenüberliegenden Seiten des Adapters (32) positionierte Halterasten (102) umfasst, wobei die Halterasten (102) konfiguriert sind, in durch Federn vorgespannte Kugellager (104) einzurasten, die in der Aufnahme (42) positioniert sind.

17. Batterieladeanordnung (30) nach Anspruch 16, wobei die Führungsschienen (96) einen L-förmigen Querschnitt aufweisen, wobei ein Schenkel des "L" konfiguriert ist, in den in der Aufnahme (42) positionierten Stift (72) einzurasten.

18. Batterieladeanordnung (30) nach Anspruch 1, wobei der Einrastmechanismus (60) ferner einen Lösemechanismus umfasst.

19. Batterieladeanordnung (30) nach Anspruch 18, wobei der Lösemechanismus ein Druckknopf ist.

20. Batterieladeanordnung (30) nach Anspruch 18, wobei der Lösemechanismus ein Stößel (84) ist.

21. Batterieladeanordnung (30) nach Anspruch 1, wobei die Ausgangsanordnung (36) einen Mini-USB-Verbinder (50) umfasst, der über ein Kabel (54) an einen USB-A-Verbinder gekoppelt ist.

## Revendications

1. Ensemble de charge de batterie (30) pour charger une batterie d'un dispositif mobile comprenant :
une unité de charge (34) ayant un convertisseur de puissance pour convertir une tension d'entrée en une tension de sortie souhaitée et ayant un réceptacle (42) sous la forme d'un évidement dans la surface inférieure de l'unité de charge (34), le réceptacle (42) formant une prise et ayant au moins un contact électrique (58) pour recevoir la tension d'entrée ;
un ensemble de sortie (36) couplé à l'unité de charge (34) pour charger une batterie d'un dispositif mobile ;
un premier ensemble d'entrée (38) associé de manière détachable à l'unité de charge (34), ledit ensemble d'entrée (38) comprenant un adaptateur (32) destiné à être fixé de manière amovible à l'unité de charge (34), un cordon d'alimentation (44), et une fiche (46) configurée pour s'accoupler avec un type de prise électrique (20) de sorte que l'unité de charge puisse être positionnée à un emplacement éloigné de la prise électrique (20), ledit adaptateur (32) étant configuré pour s'accoupler avec le réceptacle (42) de l'unité de charge (34), ledit adaptateur (32) ayant en outre au moins un contact électrique pour s'accoupler avec l'au moins un contact électrique (58) de l'unité de charge (34) ; et
un mécanisme de verrouillage (60) pour verrouiller de manière amovible l'adaptateur (32) dans le réceptacle (42),
**caractérisé en ce que** :
le mécanisme de verrouillage comprend un montant (72) défini dans le réceptacle (42) et deux bras (70 ; 96) définis sur l'adaptateur (32) qui sont adaptés pour s'engager avec le montant (72) lorsque l'adaptateur (32) est positionné dans le réceptacle (42).

2. Ensemble de charge de batterie (30) de la revendication 1, comprenant en outre un deuxième ensemble d'entrée interchangeable avec le premier ensemble d'entrée (38), le deuxième ensemble d'entrée comprenant un adaptateur (32) de deuxième ensemble d'entrée destiné à être fixé de manière amovible à l'unité de charge (34), ledit adaptateur (32) de deuxième ensemble d'entrée comportant une fiche (46) configurée pour s'accoupler avec une prise électrique (20) de sorte que l'unité de charge (34) puisse être positionnée de manière adjacente à une prise électrique (20) lorsque l'adaptateur (32) de deuxième ensemble d'entrée est installé.

3. Ensemble de charge de batterie (30) de la revendication 1, dans lequel l'ensemble de sortie (36) comprend un connecteur USB (50).

4. Ensemble de charge de batterie (30) de la revendication 3, comprenant en outre un cordon (54) couplé au connecteur USB (50).

5. Ensemble de charge de batterie (30) de la revendication 1, dans lequel l'ensemble de sortie (36) comprend des contacts électriques associés à l'unité de charge (34) et configuré pour charger au moins l'un d'une batterie et d'un dispositif mobile.

6. Ensemble de charge de batterie (30) de la revendication 1, dans lequel l'ensemble de sortie (36) comprend une station d'accueil couplée à l'unité de charge (34).

7. Ensemble de charge de batterie (30) de la revendication 1, dans lequel le cordon d'alimentation (44), l'adaptateur (32) et la fiche (46) sont solidaires.

8. Ensemble de charge de batterie (30) de la revendication 1, dans lequel l'unité de charge (34) comprend en outre un module convertisseur de puissance.

9. Ensemble de charge de batterie (30) de la revendication 8, dans lequel le module convertisseur de puissance comprend au moins l'un d'un fusible, d'une source d'entrée, d'un filtre électrique, d'un transformateur, d'une boucle de rétroaction de commutateur supérieur, d'un filtre à sortie redressée, d'un convertisseur CC-CC, d'un convertisseur CA-CA, d'un convertisseur CA-CC, d'un filtre de sortie, et d'un contrôleur à rétroaction de tension et de courant.

10. Ensemble de charge de batterie (30) de la revendication 1, dans lequel le cordon d'alimentation (44), l'adaptateur (32) et la fiche (46) comprennent des parties séparées qui sont configurées pour s'accoupler.

11. Ensemble de charge de batterie (30) de la revendication 1, comprenant :
un jeu d'ensembles d'entrée (38) comportant le premier ensemble d'entrée (38), chacun étant configuré pour s'associer individuellement de manière détachable au réceptacle (42) de l'unité de charge (34), chacun desdits ensembles d'entrée (38) comprenant un adaptateur (32) destiné à être fixé de manière amovible dans le réceptacle (42), un cordon d'alimentation (44), et une fiche (46) configurée pour s'accoupler avec un type de prise électrique murale (20), où chaque fiche (46) est configurée pour s'accoupler avec un différent type de prise électrique murale (20), ledit adaptateur (32) ayant au moins un contact électrique pour s'accoupler avec l'au moins un contact électrique (58) du réceptacle (42).

12. Ensemble de charge de batterie (30) de la revendication 1, dans lequel les bras du mécanisme de verrouillage comprennent une paire d'attaches à ressort (70) configurées pour s'engager avec le montant (72) défini dans le réceptacle (42).

13. Ensemble de charge de batterie (30) de la revendication 12, dans lequel chacune de la paire d'attaches à ressort (70) comporte une saillie (82) s'étendant vers l'intérieur pour s'accoupler avec un évidement correspondant (80) défini sur le montant (72) positionné dans le réceptacle (42).

14. Ensemble de charge de batterie (30) de la revendication 13, comprenant en outre un piston (84) positionné entre la paire d'attaches à ressort (70), ledit piston (84) étant mobile verticalement par rapport aux attaches à ressort (70) et ayant un contour qui écarte les attaches à ressort (70) lorsqu'il se déplace verticalement.

15. Ensemble de charge de batterie (30) de la revendication 1, comprenant en outre au moins une broche de guidage (76) pour guider l'adaptateur dans le réceptacle (42).

16. Ensemble de charge de batterie (30) de la revendication 1, dans lequel les bras du mécanisme de verrouillage (60) comprennent une paire de barres de guidage (96) configurées pour s'engager avec le montant (72) positionné dans le réceptacle (42) et dans lequel un mécanisme de verrouillage supplémentaire est prévu, qui comprend une paire de crans (102) positionnés sur des côtés opposés de l'adaptateur (32), lesdits crans (102) étant configurés pour s'engager avec des paliers à billes sollicités par ressort (104) qui sont positionnés sur le réceptacle (42).

17. Ensemble de charge de batterie (30) de la revendication 16, dans lequel les barres de guidage (96) ont une section transversale en forme de L, avec une branche du L configurée pour s'engager avec le montant (72) positionné dans le réceptacle (42).

18. Ensemble de charge de batterie (30) de la revendication 1, dans lequel le mécanisme de verrouillage (60) comprend en outre un mécanisme de libération.

19. Ensemble de charge de batterie (30) de la revendication 18, dans lequel le mécanisme de libération est un bouton-poussoir.

20. Ensemble de charge de batterie (30) de la revendication 18, dans lequel le mécanisme de libération est un piston (84).

21. Ensemble de charge de batterie (30) de la revendication 1, dans lequel l'ensemble de sortie (36) comprend un connecteur mini USB (50) couplé à un connecteur USB-A via un câble (54).
